# EUROPÄISCHE PATENTSCHRIFT

(11) **EP 3 001 062 B1**
(45) Veröffentlichungstag und Bekanntmachung des Hinweises auf die Patenterteilung: **26.04.2017**
(21) Anmeldenummer: 14186651.7
(22) Anmeldetag: 26.09.2014
(51) Int. Cl.: F16D 7/02, F16D 1/09

(54) **Überlastkupplung**
Overload coupling
Embrayage anti-surcharge

(43) Veröffentlichungstag der Anmeldung: 30.03.2016
(73) Patentinhaber: Siemens Aktiengesellschaft, 80333 München (DE)
(72) Erfinder: Reidl, Marcel, 48691 Vreden (DE); Scheithauer, Günter, 48691 Vreden (DE); Jansen, Andre, 46325 Borken (DE)

(56) Entgegenhaltungen:
- EP-A1- 1 380 763
- CN-U- 203 023 323
- DE-A1- 10 311 917
- US-A- 3 638 979

## Beschreibung

Die vorliegende Erfindung betrifft eine elektrisch isolierende Überlastkupplung für eine WKA (WKA = Windkraftanlage).

Die Siemens-Broschüre "Bewährte Verbindungen", Siemens AG 2011, Bestell-Nr. E20001-A60-P900-V2, zeigt auf den Seiten 14 und 15 eine drehstarre Ganzstahlkupplung. Diese eigens für WKA konzipierte Kupplung der Baureihe ARPEX^{®} verbindet die schnell laufende Getriebewelle mit der Generatorwelle und besteht üblicherweise aus den Baugruppen getriebeseitige Nabe mit Bremsscheibe, Zwischenstück und generatorseitige Nabe. Das Kupplungszwischenstück ist dabei in der Regel aus einem elektrisch isolierenden GFK-Rohr gefertigt, das mit den beiden Naben verklebt ist (GFK = Glasfaserverstärkter Kunststoff). Auf diese Weise wird eine elektrische Isolation der Kupplung erreicht, was u.a. vermeidet, dass generatorseitige Kriechströme zu einer Elektrokorrosion in der Getriebeverzahnung führen.

Als Überlastschutz, d.h. als Schutz des Antriebsstrangs gegen eine Belastung über sein Nenndrehmoment hinaus, weist diese WKA-Kupplung im GFK-Rohr eine Rutschkupplung auf. Die Rutschkupplung umfasst ein Rutschelement mit Gleitbelägen, z.B. in Form von Rutschnaben oder Rutschhülsen.

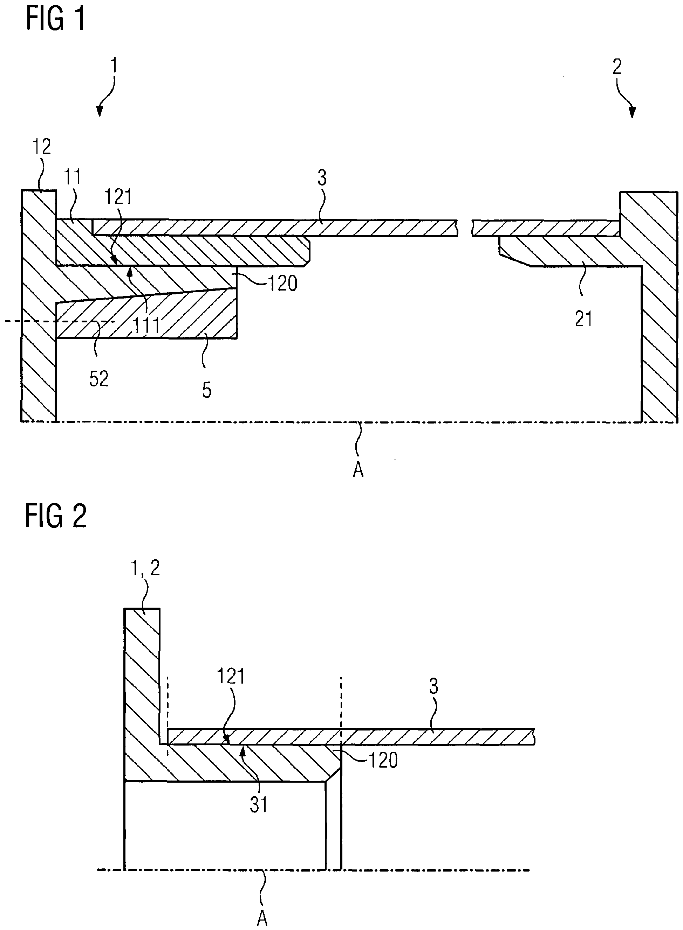

Fig. 1 zeigt einen schematischen Axialschnitt einer WKA-Kupplung, wie oben beschrieben, im Bereich des Kupplungszwischenstücks. Wie im Maschinenbau üblich, wird in Bezug auf die Rotationsachse A nur eine radiale Hälfte des Schnitts wiedergegeben. Ein GFK-Rohr 3 ist mit einer getriebeseitigen Nabe 1 und einer generatorseitigen Nabe 2 drehfest verbunden. Dabei ist das Rohr 3 an seinem einen Ende außenseitig auf ein getriebeseitiges Ringelement 11 der getriebeseitigen Nabe 1 und an seinem gegenüberliegenden Ende außenseitig auf ein generatorseitiges Ringelement 21 der generatorseitigen Nabe 2 geklebt. Dabei ist die Funktion einer in Form eines Kegelpressverbands ausgebildeten Rutschkupplung allein in die getriebeseitige Nabe 1 integriert. Dabei wird ein axial angeordneter Ringflansch 120 eines mit einem Rotor verbundenen, getriebeseitigen Stirnelements 12 durch einen konischen Spannring 5, der mittels einer Spannschraube 52 axial zu dem Stirnelement 12 gezogen wird, radial nach außen aufgeweitet und dadurch in radialer Richtung von innen nach außen gegen das getriebeseitige Ringelement 11 gepresst. Im Falle einer Überlast rutscht eine radial äußere Gleitfläche 121 des Ringflansches 120 relativ zu einer radial inneren Gleitfläche 111 des getriebeseitigen Ringelements 11. Durch die Spannung des Kegelpressverbands 5, 120 und/oder eine Beschichtung der Gleitflächen 111, 121 kann ein definiertes Rutschmoment eingestellt werden. Die Funktion einer solchen Rutschkupplung ist beispielsweise in der EP 1 693 587 A2 (ATEC-Weiss GmbH & Co. KG; A. Friedr. Flender AG) 23.08.2006 beschrieben.

DE 103 11 917 A1 (Centa-Antriebe Kirschey) 07.10.2004, die den nächstliegenden Stand der Technik bildet, beschreibt eine Kupplung zur reibschlüssigen Drehverbindung von Maschinenteilen aus Metall, wie z.B. einer Nabe und einer Welle, die mindestens ein erstes Maschinenteil aufweist, dessen mindestens eine kreiszylindrische Innenmantelfläche mittels einer durch Spannmittel erzeugten Spannkraft radial von außen gegen mindestens eine kreiszylindrische Außenmantelfläche mindestens eines zweiten Maschinenteils gepresst wird, um einen Reibschluss zwischen dem ersten Maschinenteil und dem zweiten Maschinenteil zu erzeugen. Zwischen der kreiszylindrischen Au-ßenmantelfläche des zweiten Maschinenteils und der kreiszylindrischen Innenmantelfläche des ersten Maschinenteils ist eine kreiszylindrische Gleithülse angeordnet. Der Gleithülse sind Mittel zugeordnet, welche zwischen der kreiszylindrischen Innenmantelfläche der Gleithülse und der kreiszylindrischen Außenmantelfläche des zweiten Maschinenteils eine grö-ßere Haftreibung zur Verfügung stellen als zwischen der kreiszylindrischen Außenmantelfläche der Gleithülse und der kreiszylindrischen Innenmantelfläche des ersten Maschinenteils.

EP 1 380 763 A1 (ATEC-Weiss GmbH & Co. KG) 14.01.2004 beschreibt eine Welle-Nabeverbindung mit einem Anschlussflansch und einem an diesem befestigbaren Klemmelement, insbesondere einem Klemmring, mittels dem das dem Anschlussflansch zugeordnete Wellenende unter Zwischenschaltung einer ein Rutschmoment aufnehmenden Buchse kraftschlüssig mit dem Anschlussflansch verbindbar ist.

Es ist Aufgabe der vorliegenden Erfindung, eine verbesserte elektrisch isolierende Überlast-Kupplung für eine WKA bereitzustellen.

Diese Aufgabe wird erfindungsgemäß durch eine Kupplung mit den in Anspruch 1 angegebenen Merkmalen gelöst.

Die elektrisch isolierende Überlast-Kupplung für eine Windkraftanlage umfasst ein Rohr aus einem elektrisch isolierenden Material und eine getriebe- oder generatorseitige Nabe. Dabei weist die Nabe einen axial orientierten Ringflansch auf, d.h. einen Ringflansch, dessen Rotationsachse koaxial zu der Rotationsachse der Kupplung verläuft. Das Rohr weist in einem axialen Abschnitt eine ringförmig umlaufende Gleitfläche auf, die unmittelbar an einer korrespondierenden Gleitfläche des Ringflansches anliegt. Entlang der korrespondierenden Gleitflächen ist das Rohr drehmomentabhängig gegen den Ringflansch verdrehbar.

Dabei kann der am Ringflansch anliegende axiale Abschnitt des Rohrs ein Rohrende sein; es ist aber auch möglich, dass der axiale Abschnitt in einem Mittelstück des Rohrs, d.h. einem vom Rohrende beanstandeten Abschnitt des Rohrs liegt.

Der Ringflansch ist ein ringförmiges Bauteil, an dessen Innen- oder Außenumfang das Rohr angeordnet werden kann. Dabei sind der Ringflansch und das Rohr im Wesentlichen koaxial angeordnet. Der Ringflansch ist ein Bauteil einer getriebe- oder generatorseitigen Nabe, die drehfest mit einer Getriebe- bzw. Generatorwelle verbunden ist, z.B. durch Aufschrumpfen, einen Pressverband oder eine Flanschverbindung. Der Ringflansch ist somit mittels der Nabe drehfest mit der Getriebe- bzw. Generatorwelle verbunden. Die überlastabhängige Verdrehfunktion der Überlast-Kupplung ist erfindungsgemäß in die Kontaktfläche von Ringflansch und Rohr verlegt.

Die Erfindung beruht auf der überraschenden Erkenntnis, dass ein Rutschen bzw. Gleiten direkt zwischen dem Rohr, insbesondere einem GFK-Rohr, und dem Ringflansch, insbesondere einem Stahl- oder Gussteil, erfolgen kann. Im Gegensatz zu den herkömmlichen Überlast-Kupplungen, bei denen das Rohr drehfest mit einem Ringelement einer Nabe, mit dem es unmittelbar in Kontakt steht, verbunden und als Überlast-Rutscheinheit ein separates Rutschelement mit einer ersten und einer zweiten Rutschhülsen vorgesehen ist, wobei bei einer Drehmoment- Überlast die erste Rutschhülse auf der zweiten Rutschhülse rutscht, weist bei der vorliegenden Erfindung das Rohr selbst eine Gleitfläche auf, in der es relativ zu einer korrespondierenden Gleitfläche des Ringflansches verdrehbar ist.

Da das Rohr selbst gegenüber dem Ringflansch, an dem es anliegt, verdrehbar ist, wird gegenüber den herkömmlichen Überlast-Kupplungen ein Bauteil, nämlich ein separates Rutschelement, eingespart. Die erfindungsgemäße Lösung führt, durch eine Reduzierung der verwendeten Bauteile und der Bearbeitungsoperationen, zu einer deutlichen Senkung der Herstellkosten gegenüber den bisher bekannten Lösungen.

Vorteilhafte Ausgestaltungen und Weiterbildungen der Erfindung sind in den abhängigen Ansprüchen angegeben.

Vorzugsweise ist die Gleitfläche des Rohrs folgendermaßen behandelt, um eine definierte Gleitwirkung auf dem Ringflansch zu erreichen: Die Gleitfläche weist eine gleichmäßige Oberflächenstruktur auf, die vorzugsweise durch eine mechanische Bearbeitung (z.B. Fräsen, Drehen) hergestellt wird.

Gemäß einer bevorzugten Ausgestaltung der Erfindung ist das Rohr ein GFK-Rohr. Von Vorteil ist dabei die elektrische Isolation des GFK-Materials und die hohe Belastbarkeit, insbesondere Torsionssteifigkeit, des GFK-Rohr.

Das GFK-Rohr besitzt vorzugsweise folgenden Aufbau: Es werden Umfangslagen (Radiallagen) gewickelt, um eine hohe Steifigkeit gegenüber radialer Verformung zu erzielen. Diese Lagen werden vorzugsweise in einem Winkel von ca. 85° zur Rohrachse gewickelt. Zudem weist das Rohr die für die Drehmomentübertragung notwendigen Lagen in ca. 45°-Richtung auf.

Das GFK-Rohr besteht vorzugsweise aus folgenden Materialien: Harz und Glasfaseranteil.

Vorzugsweise ist die Gleitfläche des Ringflansches folgendermaßen behandelt, um eine definierte Gleitwirkung gegen das Rohr zu erreichen: Die Gleitfläche weist eine Oberflächenstruktur auf, die vorzugsweise durch eine mechanische Bearbeitung (z.B. Fräsen, Drehen) hergestellt wird. Die Rauheit der Gleitfläche liegt in einem Bereich von bis zu Ra = 6,3 µm bzw. Rz = 10 µm (Ra = mittlere Rauheit; Rz = gemittelte Rautiefe). Vorzugsweise weist der Ringflansch eine nach dem Stand der Technik bekannte Rundlaufeigenschaft der Toleranzklasse 7 auf.

Gemäß einer bevorzugten Ausgestaltung der Erfindung besteht der Ringflansch aus einem metallischen Werkstoff, insbesondere aus Stahl oder einem Gusswerkstoff wie Gusseisen. Von Vorteil ist dabei, dass der Ringflansch stabil und kostengünstig herstellbar ist.

Der Ringflansch besitzt vorzugsweise folgenden Aufbau: Es wird eine zylindrische, mehrfach zylindrische oder konische Fläche als Gleitfläche zur Verfügung gestellt. Diese ist mechanisch wie oben beschrieben bearbeitet. Zudem kann der Ringflansch zur Verbindung mit weiteren Komponenten mehrere Bohrungen für Schrauben oder Passschrauben aufweisen. Ebenso sind weitere formschlüssige Verbindungen wie z.B. Passfeder, Mitnahmeverzahnungen oder Bogenverzahnungen denkbar.

Der Ringflansch besteht vorzugsweise aus folgenden Materialien: Stahl oder Gusswerkstoff.

Die Gleitfläche wird vorzugsweise mittels einer Schmierpaste gleichmäßig benetzt, um ein möglichst "stick-slip-freies" Gleiten zu erzielen.

Gemäß einer bevorzugten Ausgestaltung der Erfindung liegt das Rohr radial von außen an dem Ringflansch an. Von Vorteil ist dabei, dass die bei herkömmlichen Überlastkupplungen für die Klebeverbindung zwischen dem Rohr und einem Ringelement benötigte Ringfläche direkt als Reibfläche genutzt werden kann.

Gemäß einer bevorzugten Ausgestaltung der Erfindung liegt das Rohr radial von innen an dem Ringflansch an. Von Vorteil ist dabei, dass die bei herkömmlichen Überlastkupplungen für die Klebeverbindung zwischen dem Rohr und einem Ringelement benötigte Ringfläche direkt als Reibfläche genutzt werden kann.

Gemäß einer bevorzugten Ausgestaltung der Erfindung weist die Kupplung ein Spannelement auf, durch welches der Ringflansch radial verformbar und somit radial gegen das Rohr verspannbar ist. Dabei kann das Spannelement die Form eines konischen Rings aufweisen, dessen konische Fläche in axialer Richtung gegen den Ringflansch verschiebbar ist. Vorzugsweise weisen der Ringflansch und das Spannelement je eine konische Fläche auf, entlang denen die beiden Bauteile gegeneinander verschoben werden. Durch die relative Verschiebung von Spannelement und Ringflansch wird eine radiale Verformung des Ringflansches erzeugt. Von Vorteil ist dabei, dass mittels des Spannelements die radiale Verformung des Ringflansches, somit die Verspannung von Rohr und Ringflansch und in Folge dessen das Drehmoment, ab dem ein Rutschen auftritt, genau definiert werden kann.

Gemäß einer bevorzugten Ausgestaltung der Erfindung ist das Spannelement radial innerhalb des Ringflansches angeordnet, so dass der Ringflansch radial aufweitbar ist. Von Vorteil ist dabei, dass das GFK-Rohr nur von innen genau gefertigt werden muss. Die äußere Rohrfläche muss nicht nachträglich bearbeitet werden, kann im Rohzustand (Wickeln) verbleiben.

Gemäß einer bevorzugten Ausgestaltung der Erfindung ist das Spannelement radial außerhalb des Ringflansches angeordnet ist, so dass der Ringflansch radial verengbar ist. Von Vorteil ist dabei, dass das GFK-Rohr nur von außen genau gefertigt werden muss. Die innere Rohrfläche muss nicht nachträglich bearbeitet werden, kann im Rohzustand (Wickeln) verbleiben.

Gemäß einer bevorzugten Ausgestaltung der Erfindung weist die Kupplung zusätzlich einen Stützring auf, wobei das Rohr radial zwischen dem Ringflansch und dem Stützring angeordnet ist. Ein Vorteil des Stützrings ist, das der benötige Druck zur Drehmomentübertragung, der von dem Ringflansch auf das Rohr ausgeübt wird, gesteigert werden kann, ohne dass sich das GFK-Rohr über die zulässigen Grenzen dehnt. Der auf der von dem Ringflansch abgewandten Umfangsfläche des Rohrs angebrachte Stützring wirkt dem durch den Ringflansch auf das Rohr ausgeübten Radialdruck entgegen und stützt das Rohr gegen eine unzulässig weite Dehnung. Je nach Anordnung des Ringflansches relativ zu dem Rohr, außen oder innen anliegend, ist der Stützring über den Innen- bzw. Außenumfang des Rohres gezogen.

Im Folgenden wird die Erfindung anhand mehrerer Ausführungsbeispiele unter Zuhilfenahme der beiliegenden Zeichnung erläutert. Es zeigt jeweils schematisch und nicht maßstabsgetreu:
- Fig. 2: einen Axialschnitt eines ersten Ausgestaltung der Erfindung, bei der das Rohr radial von außen an dem Ringflansch anliegt;
- Fig. 3: einen Axialschnitt eines weiteren Ausgestaltung der Erfindung, bei der das Rohr radial von innen an dem Ringflansch anliegt;
- Fig. 4: einen Axialschnitt wie in Fig. 2, nur mit einem zusätzlichen Stützring;
- Fig. 5: einen Axialschnitt wie in Fig. 3, nur mit einem zusätzlichen Stützring;
- Fig. 6: einen Axialschnitt eines weiteren Ausgestaltung der Erfindung, bei der das Rohr radial von außen an dem Ringflansch anliegt und ein Spannelement radial von innen den Flansch aufweitet;
- Fig. 7: einen Axialschnitt eines weiteren Ausgestaltung der Erfindung, bei der das Rohr radial von innen an dem Ringflansch anliegt und ein Spannelement radial von außen den Flansch verengt;
- Fig. 8: einen Axialschnitt wie in Fig. 6, nur mit einem zusätzlichen Stützring;
- Fig. 9: einen Axialschnitt wie in Fig. 7, nur mit einem zusätzlichen Stützring;

Fig. 2 zeigt einen Axialschnitt einer ersten Ausgestaltung der Erfindung, bei der das Rohr 3 radial von außen an einem Ringflansch 120 einer Nabe 1, 2 anliegt. Auch wenn Fig. 2, in Bezug auf Fig. 1, eine getriebeseitige Nabe 1, 2 zeigt, ist diese Darstellung in keiner Weise einschränkend zu verstehen; die Nabe 1, 2 kann eine getriebeseitige Nabe 1 oder einer generatorseitige Nabe 2 einer WKA-Kupplung sein. Der Ringflansch 120 ist mit den übrigen Bauteilen der Nabe 1, 2 drehstarr verbunden. Das Rohr 3 liegt dabei mit einer Gleitfläche 31, die auf dem Innenumfang des Rohrs 3 ausgebildet ist, an einer korrespondierenden Gleitfläche 121 des Ringflansches 120 an, die auf dem Außenumfang des Ringflansches 120 ausgebildet ist. Die Montage des Rohrs 3 auf dem Ringflansch 120 erfolgt, indem das Rohr 3 mit Presspassung auf den Ringflansch 120 gepresst wird. Dadurch dehnt sich das Rohr 3 innerhalb zulässiger Grenzen.

Die Gleitflächen 121, 31, deren axiale Länge durch die vertikal verlaufenden gestrichelten Linien in Fig. 2 angedeutet ist, werden durch die Presspassung mit einer bestimmten Kraft aneinander gedrückt, so dass eine definierte Reibungskraft zwischen ihnen wirkt. Übersteigt das zwischen der Nabe 1, 2 und dem Rohr 3 wirkende Drehmoment die Reibungskraft zwischen den Gleitflächen 31, 121, so verdrehen sich das Rohr 3 und der Ringflansch 120 relativ zueinander, indem die Gleitflächen 121, 31 aufeinander gleiten.

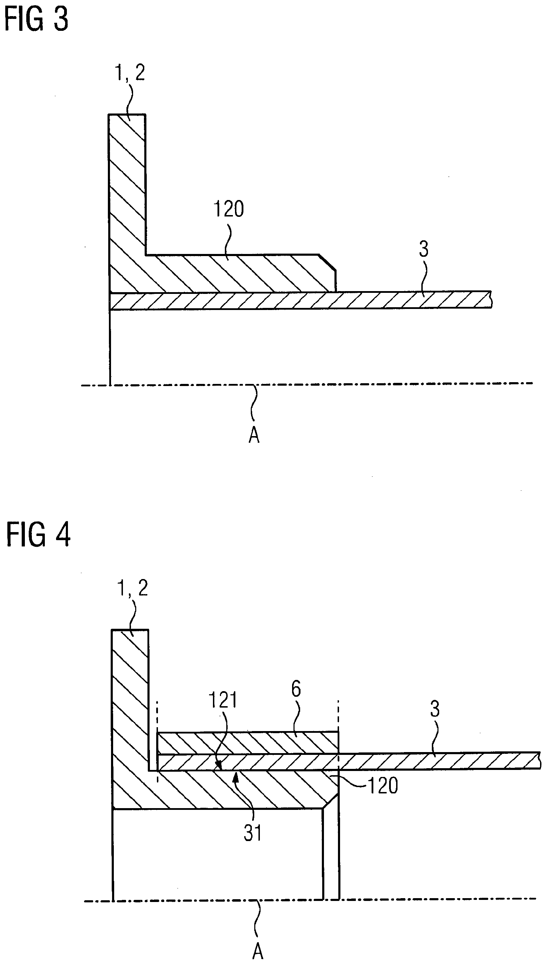

Fig. 3 zeigt einen Axialschnitt einer weiteren Ausgestaltung der Erfindung, bei der das Rohr 3 radial von innen an dem Ringflansch 120 anliegt. Der Ringflansch 120 ist vergleichbar zu dem in Fig. 2. Der Unterschied zu der Ausführungsvariante von Fig. 2, bei der das Rohr 3 den Ringflansch 120 radial von außen berührt, besteht darin, dass hier das Rohr 3 radial von innen am Ringflansch 120 anliegt. Die Montage des Rohrs 3 in dem Ringflansch 120 erfolgt, indem das Rohr 3 mit Presspassung in den Ringflansch 120 gepresst wird. Dadurch verengt sich das Rohr 3 innerhalb zulässiger Grenzen.

Fig. 4 zeigt einen Axialschnitt einer weiteren Ausgestaltung der Erfindung, der dem in Fig. 2 gezeigten Axialschnitt ähnlich ist. Der Unterschied besteht darin, dass in Fig. 4 das Rohr 3 in dem axialen Abschnitt der Gleitflächen auf seinem Außenumfang einen Stützring 6 trägt. Der Stützring 6 wirkt dem durch den Ringflansch 120 radial von innen auf das Rohr 3 ausgeübten Druck entgegen; er stützt das Rohr gegen eine unzulässig weite Dehnung. Die Montage der Kombination Rohr-Ringflansch-Stützring erfolgt, indem zunächst der Stützring 6 über das Rohr 3 geschoben wird. Danach wird das Rohr 3 mit dem darauf sitzenden Stützring 6 mit Presspassung auf den Ringflansch 120 gepresst. Dadurch dehnt sich das Rohr 3 innerhalb durch den Stützring 6 vorgegebener Grenzen.

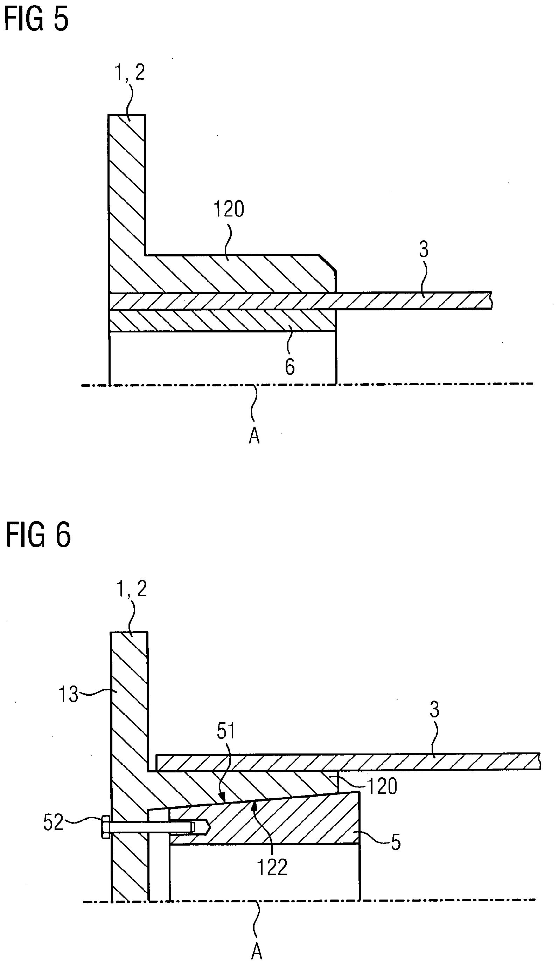

Fig. 5 zeigt einen Axialschnitt einer weiteren Ausgestaltung der Erfindung, der dem in Fig. 3 gezeigten Axialschnitt ähnlich ist. Der Unterschied besteht darin, dass in Fig. 5 das Rohr 3 in dem axialen Abschnitt der Gleitflächen auf seinem Innenumfang einen Stützring 6 trägt. Der Stützring 6 wirkt dem durch den Ringflansch 120 radial von außen auf das Rohr 3 ausgeübten Druck entgegen; er stützt das Rohr gegen eine unzulässig große radiale Verengung bzw. Stauchung. Die Montage der Kombination Rohr-Ringflansch-Stützring erfolgt, indem zunächst der Stützring 6 in das Rohr 3 geschoben wird. Danach wird das Rohr 3 mit dem darin sitzenden Stützring 6 mit Presspassung in den Ringflansch 120 gepresst. Dadurch verengt sich das Rohr 3 innerhalb durch den Stützring 6 vorgegebener Grenzen.

Fig. 6 zeigt einen Axialschnitt einer weiteren Ausgestaltung der Erfindung, bei der das Rohr 3 radial von außen an dem Ringflansch 120 anliegt und ein ringförmiges Spannelement 5 radial von innen den Ringflansch 120 aufweitet. Dabei weist das Spannelement 5 die Form eines konischen Rings auf, dessen radial nach außen weisende Fläche 51 sich konisch aufweitet. Die zum Spannelement 5 weisende Umfangsfläche 122 des Ringflansches 120 ist gegenläufig konisch zum Spannelement 5 ausgebildet. Der Ringflansch 120 und das Spannelement 5 sind entlang ihrer beiden konischen Flächen 51, 122 axial relativ gegeneinander verschiebbar. Die relative Verschiebung kann dadurch erfolgen, dass das Spannelement 5 mittels einer Spannschraube 52 in Richtung zu einem Stirnelement 13 der Nabe 1, 2 gezogen wird. Durch die relative Verschiebung wird eine radiale Verformung des Ringflansches 120 erzeugt. Durch die Länge der axialen Verschiebung ist diese Verformung und somit die Verspannung des Ringflansches 120 gegen das GFK-Rohr 3 einstellbar.

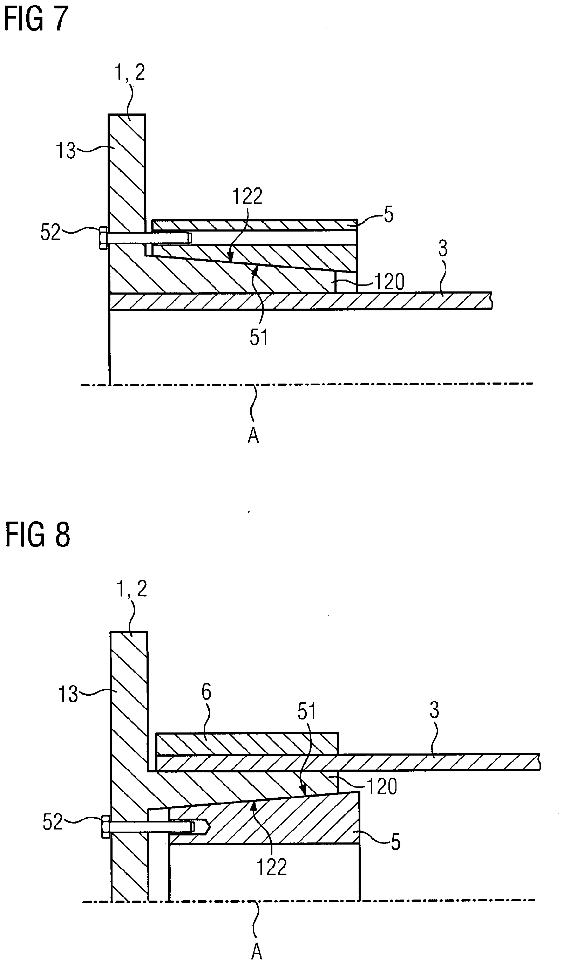

Fig. 7 zeigt einen Axialschnitt einer weiteren Ausgestaltung der Erfindung, bei der das Rohr 3 radial von innen an dem Ringflansch 120 anliegt und ein Spannelement 5 radial von au-ßen den Flansch 120 verengt. Das zu der Ausgestaltung von Fig. 4 Gesagte gilt hier entsprechend, nur mit dem Unterschied, dass hier der Ringflansch 4 nicht radial aufgeweitet, sondern radial verengt, d.h. gestaucht, wird.

Fig. 8 zeigt einen Axialschnitt einer weiteren Ausgestaltung der Erfindung, der dem in Fig. 6 gezeigten Axialschnitt ähnlich ist. Der Unterschied besteht darin, dass in Fig. 8 das Rohr 3 in dem axialen Abschnitt der Gleitflächen auf seinem Außenumfang einen Stützring 6 trägt. Der Stützring 6 wirkt dem durch den Ringflansch 120 radial von innen auf das Rohr 3 ausgeübten Druck entgegen; er stützt das Rohr gegen eine unzulässig weite Dehnung.

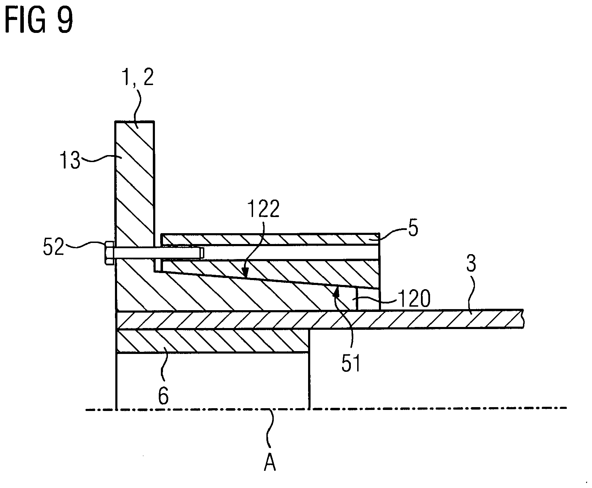

Fig. 9 zeigt einen Axialschnitt einer weiteren Ausgestaltung der Erfindung, der dem in Fig. 7 gezeigten Axialschnitt ähnlich ist. Der Unterschied besteht darin, dass in Fig. 9 das Rohr 3 in dem axialen Abschnitt der Gleitflächen auf seinem Innenumfang einen Stützring 6 trägt. Der Stützring 6 wirkt dem durch den Ringflansch 120 radial von außen auf das Rohr 3 ausgeübten Druck entgegen; er stützt das Rohr gegen eine unzulässig große radiale Verengung bzw. Stauchung.

Obwohl die Erfindung im Detail durch die bevorzugten Ausführungsbeispiele näher illustriert und beschrieben wurde, so ist die Erfindung nicht durch die offenbarten Beispiele eingeschränkt, und andere Variationen können vom Fachmann hieraus abgeleitet werden, ohne den Schutzumfang der Erfindung zu verlassen.

## Patentansprüche

1. Überlast-Kupplung für eine Windkraftanlage, umfassend ein Rohr (3) und eine getriebe- oder generatorseitige Nabe (1, 2), wobei die Nabe (1, 2) einen axial orientierten Ringflansch (120) aufweist, so dass das Rohr (3) drehmomentabhängig gegen den Ringflansch (120) verdrehbar ist,
**dadurch gekennzeichnet, dass** die Überlast-Kupplung elektrisch isolierend ist und das Rohr (3) aus einem elektrisch isolierenden Material ist, wobei das Rohr (3) in einem axialen Abschnitt eine ringförmig umlaufende Gleitfläche (31) aufweist, die unmittelbar an einer korrespondierenden Gleitfläche (121) des Ringflansches (120) anliegt.

2. Kupplung nach Anspruch 1, wobei das Rohr (3) ein GFK-Rohr ist.

3. Kupplung nach Anspruch 1 oder 2, wobei der Ringflansch (120) aus einem metallischen Werkstoff, insbesondere Stahl oder einem Gusswerkstoff, besteht.

4. Kupplung nach einem der Ansprüche 1 bis 3, wobei das Rohr (3) radial außenseitig an dem Ringflansch (120) anliegt.

5. Kupplung nach einem der Ansprüche 1 bis 3, wobei das Rohr (3) radial innenseitig an dem Ringflansch (120) anliegt.

6. Kupplung nach einem der vorhergehenden Ansprüche, wobei die Kupplung ein Spannelement (5), insbesondere in Form eines konischen Rings, aufweist, durch das der Ringflansch (120) verformbar und somit radial gegen das Rohr (3) verspannbar ist.

7. Kupplung nach Anspruch 6, wobei das Spannelement (5) radial innerhalb des Ringflansches (120) angeordnet ist, so dass der Ringflansch (120) radial aufweitbar ist.

8. Kupplung nach Anspruch 6, wobei das Spannelement (5) radial außerhalb des Ringflansches (120) angeordnet ist, so dass der Ringflansch (120) radial verengbar ist.

9. Kupplung nach einem der vorhergehenden Ansprüche, wobei die Kupplung einen Stützring (6) aufweist, wobei das Rohr radial zwischen dem Ringflansch (120) und dem Stützring (6) angeordnet ist.

## Claims

1. Overload coupling for a wind turbine generator, including a pipe (3) and a gear- or generator-side hub (1, 2), wherein the hub (1, 2) has an axially oriented ring flange (120), so that the pipe (3) can be rotated in a torque-dependent manner against the ring flange (120),
**characterised in that** the overload coupling is electrically insulating and the pipe (3) is made of an electrically insulating material, wherein the pipe (3) has an annular circumferential sliding surface (31) in an axial section, which rests directly on a corresponding sliding surface (121) of the ring flange (120).

2. Coupling according to claim 1, wherein the pipe (3) is an FRP pipe.

3. Coupling according to claim 1 or 2, wherein the ring flange (120) consists of a metallic material, in particular steel or cast material.

4. Coupling according to one of claims 1 to 3, wherein the pipe (3) rests radially on the outside of the ring flange (120).

5. Coupling according to one of claims 1 to 3, wherein the pipe (3) rests radially on the inside of the ring flange (120).

6. Coupling according to one of the preceding claims, wherein the coupling has a clamping element (5), in particular in the form of a conical ring, by means of which the ring flange (120) can be deformed and thus clamped radially against the pipe (3).

7. Coupling according to claim 6, wherein the clamping element (5) is arranged radially within the ring flange (120) so that the ring flange (120) can be expanded radially.

8. Coupling according to claim 6, wherein the clamping element (5) is arranged radially outside of the ring flange (120) so that the ring flange (120) can be constricted radially.

9. Coupling according to one of the preceding claims, wherein the coupling has a bearing ring (6), wherein the pipe is arranged radially between the ring flange (120) and the bearing ring (6).

## Revendications

1. Accouplement anti-surcharge pour une éolienne, comprenant un tuyau ( 3 ) et un moyeu ( 1, 2 ) du côté de la transmission ou de la génératrice, le moyeu ( 1, 2 ) ayant une bride ( 120 ) annulaire orientée axialement de manière à ce que le tuyau ( 3 ) puisse, en fonction du couple de rotation, subir une torsion par rapport à la bride ( 120 ) annulaire,
**caractérisé en ce que** l'accouplement anti-surcharge est isolant électriquement et le tuyau ( 3 ) est en un matériau isolant électriquemetn, le tuyau ( 3 ) ayant, dans un tronçon axial, une surface ( 31 ) de glissement, qui fait le tour annulairement et qui s'applique directement à une surface ( 121 ) de glissement correspondante de la bride ( 120 ) annulaire.

2. Accouplement suivant la revendication 1, dans lequel le tuyau ( 3 ) est un tuyau en matière plastique renforcée par de la fibre de verre.

3. Accouplement suivant la revendication 1 ou 2, dans lequel la bride ( 120 ) annulaire est en un matériau métallique, notamment en acier, ou en un matériau coulé.

4. Accouplement suivant l'une des revendications 1 à 3, dans lequel le tuyau ( 3 ) s'applique, du côté extérieur radialement, à la bride ( 120 ) annulaire.

5. Accouplement suivant l'une des revendications 1 à 3, dans lequel le tuyau ( 3 ) s'applique, du côté intérieur radialement, à la bride ( 120 ) annulaire.

6. Accouplement suivant l'une des revendications précédentes, dans lequel l'accouplement a un élément ( 5 ) de serrage, notamment sous la forme d'un anneau conique, par lequel la bride ( 120 ) annulaire est déformable et peut ainsi être bloquée radialement sur le tuyau ( 3 ).

7. Accouplement suivant la revendication 6, dans lequel l'élément ( 5 ) de serrage est disposé à l'intérieur radialement de la bride ( 120 ) annulaire, de manière à ce que la bride ( 120 ) annulaire puisse être élargie radialement.

8. Accouplement suivant la revendication 6, dans lequel l'élément ( 5 ) de blocage est monté à l'extérieur radialement de la bride ( 120 ) annulaire, de manière à ce que la bride ( 120 ) annulaire puisse être rétrécie radialement.

9. Accouplement suivant l'une des revendications précédentes, dans lequel l'accouplement a un anneau ( 6 ) d'appui, le tuyau étant disposé radialement entre la bride ( 120 ) annulaire et l'anneau ( 6 ) d'appui.
